# DEMANDE DE BREVET EUROPEEN

(11) **EP 4 470 379 A1**
(43) Date de publication de la demande: **04.12.2024**
(21) Numéro de dépôt: 24178866.0
(22) Date de dépôt: 29.05.2024
(51) Int. Cl.: A22C 11/10, B65B 9/12

(54) **DISPOSITIF POUR PORTIONNER DES SAUCISSES COMPRENANT DES MOYENS DE TORSADAGE**

(30) Priorité: 30.05.2023 FR 2305369
(71) Demandeur: Ikomaa, 56140 Pleucadeuc (FR)
(72) Inventeur: Bony, Marc, 56800 Ploermel (FR)
(74) Mandataire: Lequien, Philippe

(57) **Abrégé**

L'invention concerne un dispositif (1) de mise en portion d'une saucisse continue (10), comprenant :
- un support (11) ;
- une platine (2) montée à rotation sur le support (11) autour d'un axe (20) de la platine ;
- au moins deux pinces (3) montées sur la platine (2) autour de l'axe (20) de rotation, les deux pinces (3) étant mobiles entre une position refermée dans laquelle elles sont susceptibles de pincer une saucisse continue (10) et de la tracter au moins partiellement autour de la platine (2), et une position ouverte dans laquelle elles sont susceptibles d'accueillir une saucisse continue (10) ou de relâcher la saucisse continue (10) ;
- des moyens de torsadage (4), montés sur la platine (2), et intercalés entre deux pinces (3).

## Description

Le domaine de l'invention est celui de la conception et de la fabrication de dispositifs pour portionner des saucisses.

L'invention concerne plus particulièrement un dispositif alimenté par une saucisse continue, et conçu pour portionner la saucisse continue en saucisses, et si nécessaire pour découper les saucisses portionnées.

Dans le domaine de l'invention il est connu des dispositifs permettant de portionner des saucisses de manière automatique.

Ces dispositifs sont alimentés en continu par une saucisse, dite saucisse continue, qui est formée d'un boyau rempli d'une farce, par exemple de viande, ou végétal.

La saucisse continue circule sur la machine, et est pincé de manière régulière sur sa longueur pour chasser la farce sur le long d'une section prédéterminée du boyau. Une portion de saucisse est ainsi formée entre deux sections pincées du boyau.

Il est produit de cette manière un chapelet de saucisses séparées les unes des autres par un resserrement du boyau.

Les dispositifs peuvent également être conçus pour sectionner le boyau au niveau des resserrements du boyau de manière à produire des saucisses individuelles.

Pour reproduire une méthode manuelle de production de saucisses, il peut être cherché à torsader les saucisses portionnées les unes par rapport aux autres le long du boyau continu. Un torsadage permet également de chasser la farce de la section de la saucisse se tordant sur elle-même, et de produire des saucisses dont les extrémités ressemblent à celles observables sur des saucisses réalisées uniquement manuellement.

À cet effet, différentes conceptions de machines ont été proposées par l'art antérieur.

L'objectif recherché est de produire des saucisses de manière automatisée, ou semi-automatisée, par un dispositif, et reproduisant l'aspect visuel d'une saucisse obtenue par la méthode traditionnelle.

Une première technique a proposé un dispositif présentant une pluralité d'organes montés en cercles autour d'un disque rotatif, et délimitant un chemin en arc de cercle dans lequel une saucisse continue s'enroule, et est régulièrement pincée, torsadée et coupée.

Des organes conçus pour pincer le boyau et le tracter dans le chemin en arc de cercle sont chacun formés par une pince, avec un mors mâle et un mors femelle.

Chaque pince se referme sur le boyau continu en le pinçant pour chasser le contenu du boyau de part et d'autre de la section pincée, le tracte le long du chemin, puis se rouvre pour relâcher la saucisse portionnées.

Une lame peut être intégrée dans chaque pince pour sectionner les sections pincées du boyau préalablement au relâchement des saucisses.

Entre chaque paire de pinces directement adjacentes, la machine présente des organes de torsadage.

Ces organes de torsadage sont configurés pour faire tourner les portions de saucisses autour de leur axe central, et permettre la réalisation de « queues torsadées » à l'extrémité des saucisses.

Ces organes de torsadage comprennent :
- une crémaillère présentant une surface supérieure dentelée, avec des dents qui présentent une surface externe s'étendant dans un même plan, et
- deux rouleaux dentés, présentant une forme externe épousant la forme d'un cylindre de révolution, destinés à venir appuyer sur une face supérieure de la saucisse pour mettre en contact une face inférieure de la saucisse sur la crémaillère.

Au fur et à mesure de la progression des organes autour de l'axe de la machine, la crémaillère effectue une translation orthogonalement à l'axe central de la saucisse mise en contact sur la crémaillère, tandis que les deux rouleaux roulent dans un sens complémentaire à celui de la crémaillère pour entraîner en rotation la saucisse autour de son axe.

La saucisse étant maintenue par les pinces l'encadrant, l'action des organes de torsadage entraîne la rotation de la saucisse autour de son axe, et la création d'un torsadage à chaque bout de la saucisse, à proximité immédiate de chaque pince.

Une deuxième technique met en oeuvre un dispositif présentant une pluralité d'organes de torsadage disposés en ligne, et conçus pour portionner en torsadant une saucisse continue avançant le long d'un chemin rectiligne.

Ces organes de torsadage comprennent deux rouleaux inférieurs et deux rouleaux supérieurs se refermant sur la saucisse continue, les rouleaux présentant chacun une forme délimitant un cylindre de révolution.

Pour la première technique, il est absolument nécessaire de disposer de boyaux présentant une très bonne qualité car la crémaillère a tendance à arracher le boyau, tout en ne permettant malheureusement pas d'obtenir une bonne torsade. Il est alors utilisé du boyau de mouton (qui présente une grande résistance) et de limiter le nombre de torsades à 2,5 tours.

Pour la deuxième technique, le système en ligne ne peut lui aussi accepter que des boyaux de mouton, en effet il existe un risque de déchirement du boyau lors de la mise en fonctionnement du dispositif, et seuls les boyaux de mouton présentent la résistance nécessaire.

Ces techniques présentent également pour inconvénients de ne pas être démontables pour le nettoyage ce qui risque de produire un défaut d'hygiène, d'être bruyantes, et de ne produire que des saucisses présentant une longueur unique, non modifiable.

L'invention a notamment pour objectif de pallier à ces inconvénients de l'art antérieur.

Plus précisément, l'invention a pour objectif de proposer un dispositif de mise en portions d'une saucisse continue qui permet de torsader les portions de saucisses en présentant un risque moindre de déchirement du boyau de la saucisse que les dispositifs selon l'art antérieur.

L'invention a également pour objectif de fournir un tel dispositif qui permette de réaliser une meilleure torsade que ce qui est permis par les dispositifs selon l'art antérieur, notamment qui permet de réaliser un nombre plus important de torsades.

Ces objectifs, ainsi que d'autres qui apparaîtront par la suite, sont atteints grâce à l'invention qui a pour objet un dispositif de mise en portion d'une saucisse continue, comprenant :
- un support;
- une platine montée à rotation sur le support autour d'un axe de la platine ;
- au moins deux pinces montées sur la platine autour de l'axe de rotation, les deux pinces étant mobiles entre une position refermée dans laquelle elles sont susceptibles de pincer une saucisse continue et de la tracter au moins partiellement autour de la platine, et une position ouverte dans laquelle elles sont susceptibles d'accueillir une saucisse continue ou de relâcher la saucisse continue ;
- des moyens de torsadage, montés sur la platine, et intercalés entre deux pinces, dans lequel les moyens de torsadage comprennent, entre deux pinces :
- au moins un organe supérieur, l'organe supérieur s'étendant longitudinalement entre les deux pinces, et étant configuré pour être en contact avec un côté dorsal d'une saucisse continue s'étendant entre les deux pinces lors d'une opération de torsadage ;
- au moins un organe inférieur s'étendant longitudinalement entre les deux pinces, et étant configuré pour être en contact avec un côté ventral d'une saucisse continue s'étendant entre les deux pinces lors d'une opération de torsadage ;

dans lequel une rotation de la platine ouvre ou ferme les pinces, et entraîne un déplacement de l'organe supérieur et un déplacement de l'organe inférieur aptes à entraîner en rotation autour d'elle-même une saucisse continue s'étendant entre les deux pinces,
caractérisé en ce que l'organe supérieur présente un profil longitudinal comportant une portion concave apte à épouser la forme courbe adoptée par une saucisse continue s'étendant entre les deux pinces,
et en ce que l'organe inférieur présente un profil longitudinal comportant une portion convexe avec un rayon de courbure similaire à un rayon de courbure présenté par la portion concave du profil longitudinal de l'organe supérieurs,
et en ce que en ce que les moyens de torsadage comprennent entre deux pinces au moins un organe latéral s'étendant longitudinalement entre les deux pinces, et étant configuré pour être en contact avec un côté latéral de la saucisse continue s'étendant entre les deux pinces lors d'une opération de torsadage,
et en ce que l'organe latéral est monté mobile par rapport à un support le portant, selon au moins une direction s'étendant transversalement à une saucisse continue s'étendant entre les deux pinces lors d'une opération de torsadage,
et en ce que les moyens de torsadage comprennent des moyens de rappel élastique, dits seconds moyens de rappel élastique, de l'organe latéral vers une saucisse continue s'étendant entre les deux pinces lors d'une opération de torsadage.

Grâce au dispositif selon l'invention, il est possible de mettre en portions une saucisse continue avec un risque moindre de déchirement du boyau de la saucisse par rapport aux dispositifs selon l'art antérieur.

En effet, l'organe supérieur et l'organe inférieur présentent chacun une forme épousant au moins partiellement la forme courbée adoptée par une saucisse continue qui est tractée par les pinces et qui s'enroule au moins partiellement autour de la platine pour être portionnée. Lorsque la saucisse continue est pincée et tractée par les pinces, elle adopte une forme arquée.

De cette manière, il a été constaté que les moyens de torsadage n'ont pas ou peu tendance à déchirer le boyau de la saucisse continue, et il est ainsi permis de diminuer la qualité du boyau et d'augmenter le nombre de tours de torsade.

L'organe latéral agit de manière complémentaire avec l'organe supérieur et l'organe inférieur.

L'organe latéral optimise le torsadage d'une saucisse continue.

En plus de permettre le torsadage de saucisses continues de différents diamètres, les seconds moyens de rappel élastique permet à l'organe latéral de bien plaquer la saucisse continue contre l'organe supérieur et l'organe inférieur afin que le torsadage se déroule correctement, et soit ainsi optimisé. Il est alors possible d'augmenter le nombre de tours de torsades réalisable par le dispositif.

Selon une caractéristique préférentielle, l'organe supérieur comprend des dents présentant une arête présentant chacune un profil longitudinal avec la portion concave centrée le long de l'arête.

Grâce à une telle forme de l'organe supérieur, la saucisse continue à tendance à être mieux entraînée en rotation autour d'elle-même pour produire des torsades à ses extrémités. Les dents présentant le profil longitudinal avec la portion concave, elles n'ont pas tendance à produire un déchirement du boyau de la saucisse continue.

Préférentiellement, l'organe supérieur est formé par un rouleau, dit rouleau supérieur.

Selon le mode de réalisation préféré, chacune des dents des rouleaux supérieurs présente le profil longitudinal avec la portion concave.

Selon un autre caractéristique préférée, l'organe inférieur comprend des dents présentant une arête présentant chacune un profil longitudinal avec la portion convexe centrée le long de l'arête.

Préférentiellement, l'organe inférieur est formé par un rouleau, dit rouleau inférieur.

Selon une conception préférée, les rouleaux inférieurs et les rouleaux supérieurs sont arrondis aux extrémités de leurs profils longitudinaux.

Cela permet également d'améliorer la capacité des rouleaux à éviter un déchirement du boyau lors d'un torsadage.

Selon un mode de réalisation avantageux, l'organe supérieur est monté mobile par rapport à l'organe inférieur selon au moins une direction s'étendant transversalement à une saucisse continue s'étendant entre les deux pinces lors d'une opération de torsadage,
et les moyens de torsadage comprennent des moyens de rappel élastique, dites premiers moyens de rappel élastique, de l'organe supérieur vers une saucisse continue s'étendant entre les deux pinces lors d'une opération de torsadage.

Grâce au rappel élastique de l'organe supérieur vers une saucisse continue qui s'étend entre les deux pinces lors d'une opération de torsadage, alors l'opération de torsadage a tendance à mieux se dérouler, et le dispositif peut s'adapter directement à différents diamètres de saucisses continue.

Selon une conception préférée, les moyens de torsadage comprennent deux blocs de torsadage montés sur la platine entre les deux pinces, l'un des deux blocs de torsadage, dit premier bloc de torsadage, portant le ou au moins l'un des organes supérieurs, et le ou au moins l'un des organes inférieurs, et au moins l'un des deux blocs de torsadage est mobile entre :
- une position de torsadage ;
- une position écartée pour permettre l'insertion d'une saucisse continue.

Dans la position de torsadage les deux blocs de torsadage sont rapprochés l'un de l'autre, et dans la position écartée, les deux blocs torsadage sont écartés l'un de l'autre notamment par rapport à la position de torsadage.

Préférentiellement, les deux blocs de torsadage sont mobiles entre une position de torsadage, et une position écartée.

Selon une solution préférée, le dispositif comprend :
- des tiges solidaires de la platine et s'étendant parallèlement à l'axe de la platine, au moins l'un des blocs de torsadage étant couplé libre en translation sur au moins l'une des tiges, ledit bloc de torsadage comprenant un suiveur ;
- un cylindre pour le bloc de torsadage comprenant un suiveur, le cylindre étant solidaire du support et positionné en côté de la platine, le cylindre présentant un chemin de came continu dans lequel le suiveur est inséré ;
la rotation de la platine autour de l'axe de la platine entraînant le déplacement dudit bloc de torsadage entre sa position de torsadage et sa position écartée par le guidage du suiveur dans le chemin de came.

Selon cette solution, lors de la mise en rotation de la platine autour de son axe alors les moyens de torsadage sont actionnés grâce au guidage du suiveur à l'intérieur du chemin de came du fait que le bloc de torsadage portant le suiveur est également entraîné pour suivre la rotation de la platine,.

Ce chemin de came s'étend de manière continue autour d'une surface radicalement externe du cylindre et s'écarte ou se rapproche de la platine. En conséquence, lorsque le chemin de came se rapproche de la platine alors le bloc de torsadage comprenant le suiveur est guidé dans une direction se rapprochant de la platine, et lorsque le chemin de came s'éloigne de la platine alors le bloc de torsadage comprenant le suiveur est guidé dans une direction s'éloignant de la platine.

Préférentiellement, pour le ou au moins un bloc de torsadage mobile entre une position écartée et une position de torsadage, les moyens de torsadage comprennent :
- au moins une portion de couronne dentée solidaire du support ;
- un engrenage entraînant le déplacement de l'organe supérieur porté par ledit bloc de torsadage, l'engrenage étant engrené avec la portion de couronne dentée en position de torsadage.

L'engrenage peut être décalé en côté du plan dans lequel s'étend la portion de couronne dentée dans la position écartée du bloc de torsadage. Dans ce cas, lors du passage du bloc de torsadage depuis sa position écartée jusqu'à sa position de torsadage, l'engrenage du bloc de torsadage se positionne de manière à pouvoir s'engrener avec la portion de couronne dentée.

Avantageusement, chaque bloc de torsadage porte un organe inférieur et un organe supérieur.

De cette manière, la saucisse continue est encadrée par quatre rouleaux dont la rotation, bien entendu selon le même sens de rotation, permet de l'entraîner en rotation autour de son axe et de torsader ses extrémités.

Avantageusement, l'engrenage du bloc de torsadage entraîne également la rotation du rouleau inférieur.

Selon une solution avantageuse, une rotation de la platine entraîne un déplacement de l'organe latéral complémentaire des déplacements de l'organe supérieur et de l'organe inférieur, pour entraîner en rotation autour d'elle-même une saucisse continue s'étendant entre les deux pinces.

Avantageusement, les moyens de torsadage comprennent entre deux pinces :
- un seul organe supérieur et un seul organe inférieur configurés chacun pour être respectivement en contact avec le côté dorsal et le côté ventral d'une saucisse continue, de manière décalée vers un côté latéral d'une saucisse continue par rapport à un plan sagittal médian de la saucisse continue entre les deux pinces ;
- un seul organe latéral configuré pour être en contact avec l'autre côté latéral de la saucisse continue.

Selon une conception préférée, l'organe latéral prend la forme d'un rouleau, dit rouleau latéral, et avantageusement présente un profil longitudinal présentant une portion convexe qui est préférentiellement centrée le long du profil longitudinal.

L'organe latéral produit ainsi ses effets sans risquer de déchirer le boyau de la côte saucisse continue, tout en minimisant son encombrement.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- [Fig. 1] la figure 1 est une représentation schématique partielle en perspective d'un dispositif de mise en portion d'une saucisse continue, selon un premier mode de réalisation de l'invention ;
- [Fig. 2] la figure 2 est une représentation schématique partielle en perspective, selon un autre point de vue, du dispositif de mise en portion d'une saucisse continue, selon le premier mode de réalisation de l'invention ;
- [Fig. 3] la figure 3 est une représentation schématique partielle en perspective, centrée sur une partie des moyens de torsadage, du dispositif de mise en portion d'une saucisse continue, selon le premier mode de réalisation de l'invention ;
- [Fig. 4] la figure 4 est une illustration, selon une coupe transversale, d'une saucisse continue encadrée par une partie des moyens de torsadage du dispositif, selon le premier mode de réalisation de l'invention ;
- [Fig. 5] la figure 5 est une représentation schématique en perspective d'un engrenage d'un bloc de torsadage du dispositif, selon le premier mode de réalisation de l'invention ;
- [Fig. 6] la figure 6 est une représentation schématique en perspective d'un rouleau inférieur des moyens de torsadage du dispositif selon l'invention ;
- [Fig. 7] la figure 7 est une représentation schématique en perspective d'un rouleau supérieur des moyens de torsadage du dispositif selon l'invention ;
- [Fig. 8] la figure 8 est une illustration schématique du fonctionnement du dispositif selon l'invention ;
- [Fig. 9] la figure 9 est une représentation schématique partielle en perspective d'un dispositif de mise en portion d'une saucisse continue, selon un second mode de réalisation de l'invention ;
- [Fig. 10] la figure 10 est une représentation schématique selon une vue en coupe transversale d'une partie des moyens de torsadage, selon le second mode de réalisation de l'invention ;
- [Fig. 11] la figure 11 est une représentation schématique en perspective d'un bloc de torsadage du second mode de réalisation de l'invention.

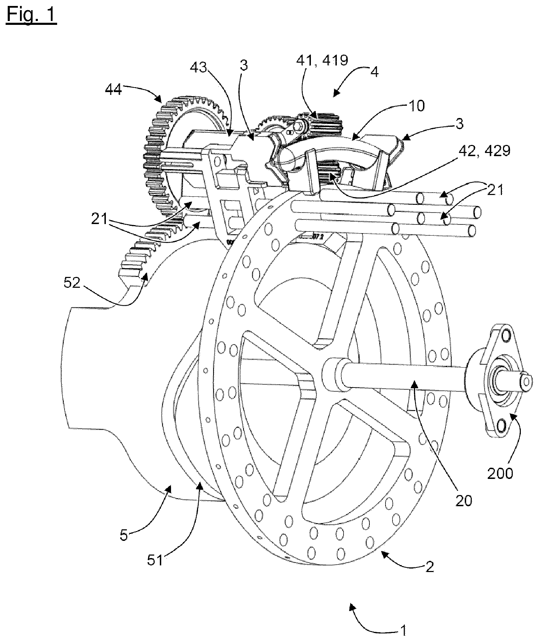

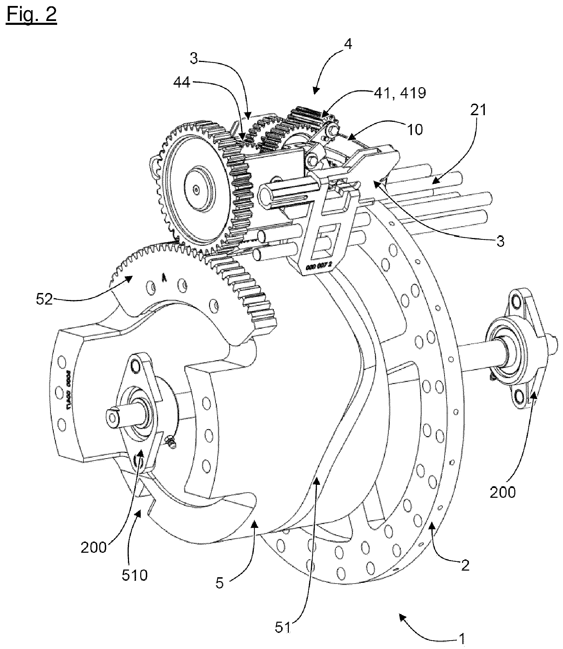

En référence aux figures 1 et 2, un dispositif 1 de mise en portion d'une saucisse continue 10 est représenté. Ce dispositif 1 est représenté partiellement.

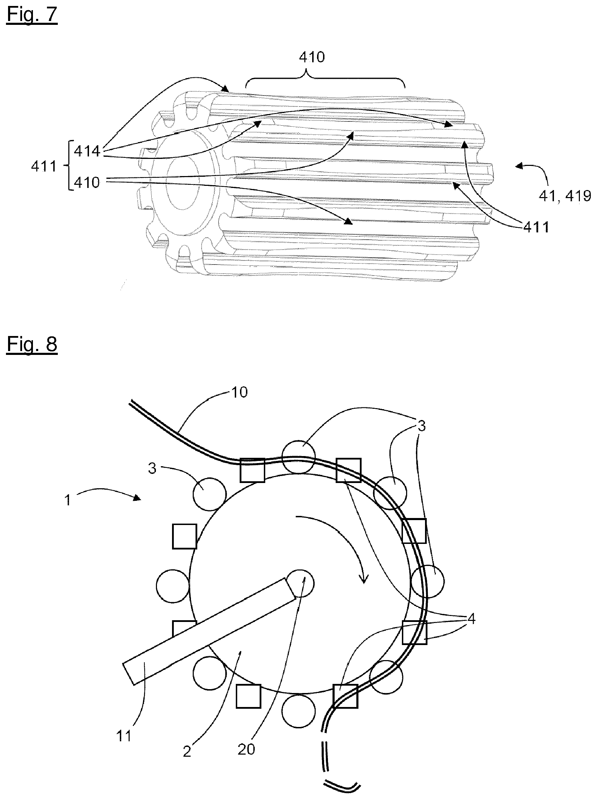

En référence à la figure 8, le fonctionnement du dispositif 1 est représenté.

Le dispositif 1 permet de mettre en portions une saucisse continue 10.

Le dispositif 1 comprend :
- un support 11 ;
- une platine 2 montée à rotation sur le support 11 ;
- au moins deux pinces 3 montées sur la platine 2 ;
- des moyens de torsadage 4 montés sur la platine 2.

Le support 11 correspond par exemple à un piétement.

La platine 2 est montée à rotation sur le support 11 autour d'un axe 20 de la platine 2. Tel que cela est visible sur les figures 1 et 2, l'axe 20 est mobile en rotation sur deux paliers 200. Ces deux paliers 200 sont solidarisés au support 11.

La platine 2 prend la forme d'un disque et plus spécifiquement d'une couronne reliée par des bras à une partie centrale solidarisée à l'axe 20.

Le dispositif 1 comprend des tiges 21 qui sont solidaires de la platine 2 et qui s'étendent parallèlement à l'axe 20 de la platine 2.

Tel que cela est détaillé par la suite, les pinces 3 et les moyens de torsadage 4 sont montés mobile en translation sur les tiges 21.

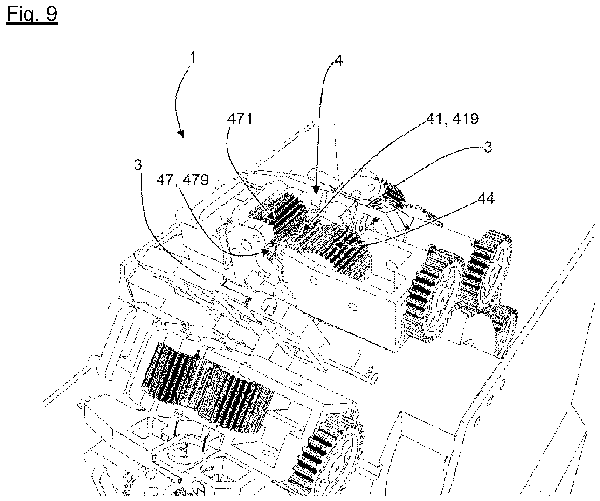

En référence aux figures 1 et 2, seul l'un des deux mors de chacune des deux pinces 3 est représenté. Dans le dispositif 1 complet, au sein de chaque pince 3, un autre mors fait face au mors représenté. En référence à la figure 9, les deux mors de chaque pince 3 sont représentés.

Les pinces 3 sont mobiles entre une position refermée dans laquelle elles sont susceptibles de pincer une saucisse continue 10 et de la tracter au moins partiellement autour de la platine 2, tel que cela est notamment illustré par la figure 8, et une position ouverte dans laquelle les pinces 3 sont susceptibles d'accueillir une saucisse continue 10 ou de la relâcher.

Selon une conception bien connue, chaque pince 3 est conçue pour se refermer sur une saucisse continue 10, pour la pincer afin de chasser le contenu de la saucisse continue 10 de part et d'autre de la section pincée, puis, si cela est souhaité, permettre la coupe de la section pincée par le biais d'une lame montée mobile en translation à l'intérieur de la pince 3.

Afin d'animer les pinces lors de la rotation de la platine 2, des systèmes à cames sont par exemple employés.

Tel qu'évoqué précédemment, les moyens de torsadage 4 sont montés sur la platine 2, et plus spécifiquement disposés autour de l'axe 20 de rotation de la platine 2. Ces moyens de torsadage 4 sont notamment intercalés entre deux pinces 3 adjacentes, c'est-à-dire se suivant autour de la platine 2, tel que cela est notamment illustré sur la figure 8.

En en référence au figure 1 à 11, les moyens de torsadage 4 comprennent :
- au moins un organe supérieur 41 ;
- au moins un organe inférieur 42.

Selon les présents modes de réalisation le ou les organes supérieurs 41 sont formés par un ou des rouleaux supérieurs 419, et le ou les organes inférieurs 42 sont formés par un ou des rouleaux inférieurs 429.

Selon le premier mode de réalisation illustré par les figures 1 à 7, les moyens de torsadage 4 comprennent deux organes inférieurs qui sont chacun formé par un rouleau inférieur 429. De plus, les moyens de torsadage 4 comprennent deux organes supérieurs qui sont chacun formé par un rouleau supérieur 419.

Chaque organe supérieur 41 et chaque organe inférieur 42 s'étend longitudinalement entre deux pinces 3.

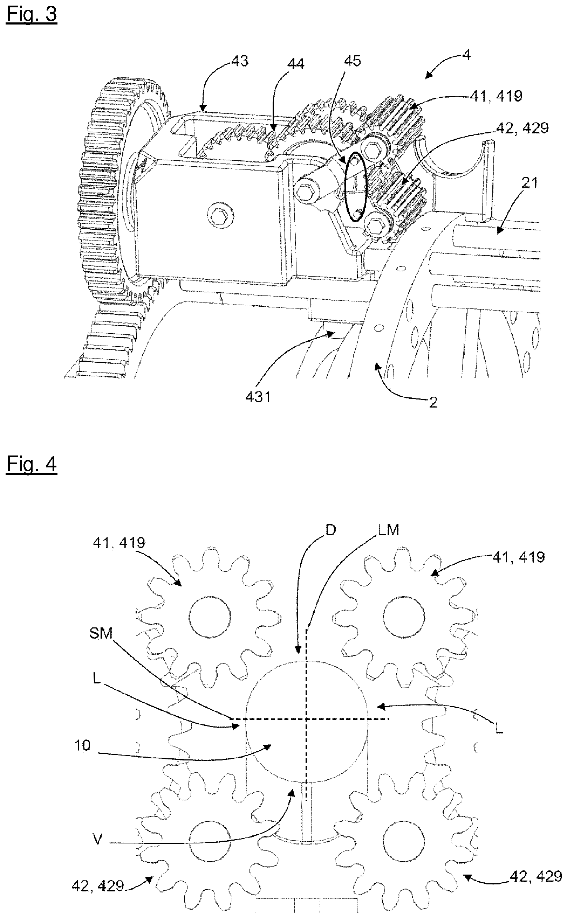

Tel que cela est représenté par la figure 4, chaque organe supérieur 41 est configuré pour être en contact avec un côté dorsale D d'une saucisse continue 10 qui s'étend entre les deux pinces 3 lors d'une opération de torsadage.

De même, chaque organe inférieur 42 s'étend longitudinalement entre deux pinces 3.

Selon d'autres modes de réalisation envisageables, l'organe inférieur 42 et/ou l'organe supérieur pourraient prendre la forme de crémaillères s'étendant longitudinalement entre deux pinces 3.

Tel que cela est représenté par les figures 1 et 4, une saucisse continue 10 s'arque entre deux pinces 3. La saucisse continue 10 présente alors un côté ventral V, un côté dorsal D, et deux côtés latéraux L.

Le côté ventral V correspond à la face de la saucisse orientée vers l'axe 20 de rotation de la platine, tandis que le côté dorsal D fait face vers l'extérieur du dispositif.

Le côté ventral V peut ainsi être qualifié de concave, et le côté dorsal D de convexe, dans un plan longitudinal médian LM de la saucisse continue 10 entre les deux pinces 3.

En d'autres termes et en référence à la figure 4, dans le dispositif entre les pinces 3, la saucisse continue 10 assume une forme géométrique théorique comprenant un axe central courbé s'inscrivant dans le plan longitudinal médian LM.

Le côté ventral V et le côté dorsal D s'étendent chacun latéralement en direction l'un de l'autre jusqu'à atteindre, sans intégrer, les lignes de démarcation entre ces deux côtés qui s'inscrivent dans une coupe sagittale médiane SM de la saucisse continue.

Les côtés latéraux L correspondent quant à eux aux faces de la saucisse continue 10 situées de part et d'autre du plan longitudinal médian LM.

Chaque côté latéral L partage ainsi avec le côté dorsal D et le côté ventral V des parties communes.

Chaque organe inférieure 42 est configuré pour être en contact avec un côté ventral V d'une saucisse continue 10 qui s'étend entre les deux pinces 3 lors d'une opération de torsadage.

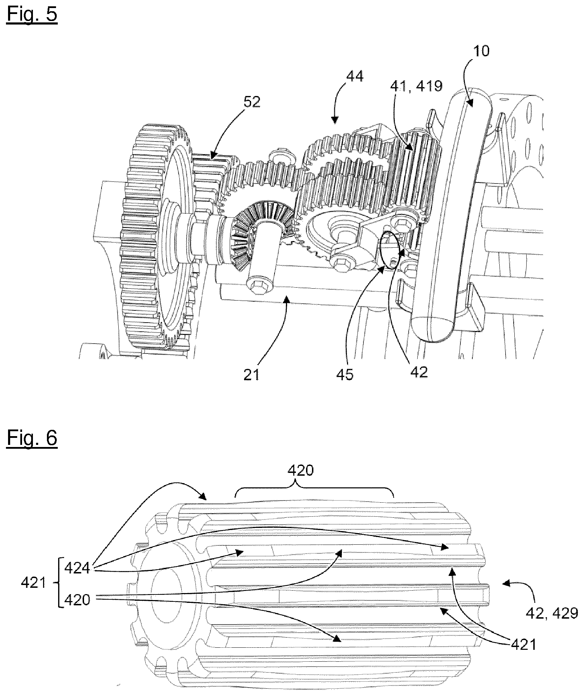

En référence aux figures 6, et 7, les rouleaux supérieurs 419 ont un profil présentant une portion concave 410 qui est apte à épouser la forme courbe adoptée par une saucisse continue 10 s'étendant entre deux pinces 3.

Le ou les organes inférieures 42, et plus spécifiquement les rouleaux inférieurs 429, présentent quant à eux un profil longitudinal présentant une portion convexe 420.

Tel que cela est détaillé par la suite, le ou les rouleaux supérieurs 419 et le ou les rouleaux inférieurs 429 sont chacun mobile en rotation autour de leur propre axe de rotation centré par rapport à la forme cylindrique du rouleau.

Le ou chaque organe supérieure 41 comprend des dents 411.

De même, le ou chaque organe inférieur 42 comprennent également des dents 421.

Ces dents 411, 421 sont régulièrement espacées les unes des autres. L'organe inférieur 42 et l'organe supérieur 41 sont ainsi formés par des rouleaux dentés.

Ces dents 411, 421 s'étendent chacune longitudinalement le long de l'axe du rouleau qui les présente.

Les dents 411 de chaque rouleau supérieur 419 présentent chacune une arête 412. Chaque arête 412 présente un profil longitudinal avec la portion concave 410 centrée le long de l'arête 412.

Tel que cela est visible sur la figure 7, ces portions concave 410 présentent un rayon de courbure unique.

De plus, le long du profil longitudinal de l'arête 412 ces portions concave 410 sont encadrées par des portions plane 414.

Il est envisageable que les portions concave 410 occupent toute la longueur du profil longitudinal de l'arête 412.

Pour chaque arête 412, les portions concave 410 s'étendent depuis les portions plane 414 vers le centre de l'arête 412 en présentant une largeur s'agrandissant. En d'autres termes, les portions concave 410 présentent une largeur en leur centre qui est plus importante que la largeur présentée à l'interface avec les portions planes 414.

Les dents 421 de chaque rouleau inférieur 429 présentent chacune une arête 422. Chaque arête 422 présente un profil longitudinal avec la portion convexe 420 centrée le long de l'arête 422.

Tel que cela est visible sur la figure 6, ces portions convexe 420 présentent un rayon de courbure unique.

La portion convexe 420 présente un rayon de courbure similaire à un rayon de courbure présenté par la portion concave 410 du profil longitudinal des rouleaux supérieurs 419.

Ces rayons de courbure sont dépendants de la taille de la platine 2, et notamment de son diamètre, et de l'emplacement et de la configuration des moyens de torsadage 4, ainsi que des pinces 3. En effet, une saucisse continue pincée par les pinces 3 va naturellement adopter une forme arquée dont le propre rayon de courbure est dépendant, entre autres, de ces paramètres.

De plus, le long du profil longitudinal de l'arête 422 ces portions convexe 420 sont encadrées par des portions plane 424.

Il est envisageable que les dents 421 ne présentent pas de portions planes 414, et qu'elle présentent uniquement une portion convexe 420 occupant toute la longueur de l'arête 422.

Au contraire des portions concaves 410, pour chaque arête 422, les portions convexes 420 s'étendent depuis les portions plane 424 vers le centre de l'arête 422 en présentant une largeur s'amenuisant. En d'autres termes, les portions convexes 420 présentent une largeur en leur centre qui est plus faible que la largeur présentée à l'interface avec les portions planes 414.

Selon les présent mode de réalisation, le ou les rouleaux inférieurs 419 et le ou les rouleaux supérieurs 429 sont arrondis aux extrémités de leurs profils longitudinaux.

Tel que cela est évoqué précédemment, les rouleaux sont mobiles en rotation pour pouvoir entraîner la rotation sur elle-même de la saucisse.

En référence au mode de réalisation des figures 1 à 3, ainsi qu'à la figure 5, les moyens de torsadage 4 comprennent deux blocs de torsadage 43 qui sont montés sur la platine 2.

Un seul bloc de torsadage 43 est représenté sur les figures, un autre bloc de torsadage 43, non représenté, doit être positionné en vis-à-vis du bloc de torsadage 43 représenté, de l'autre côté de là où doit être située la saucisse continue à torsader.

Ces deux blocs de torsadage 43 sont montés sur la platine 2 entre les deux pinces 3.

En référence à la figure 8, le dispositif 1 comprend bien entendu une pluralité de paires de bloc de torsadage 43 qui sont chacune montées entre deux pinces 3 directement adjacentes.

Chaque bloc de torsadage 43 porte l'un des deux rouleaux supérieures 419.

Selon le présent mode de réalisation, chaque bloc de torsadage 43 porte également l'un des deux rouleaux inférieures 429.

Au moins l'un des deux blocs de torsadage 43 est mobile entre :
- une position de torsadage ;
- une position écartée.

Selon le présent mode de réalisation les deux blocs de torsadage 43 sont mobiles tel qu'évoqué précédemment.

Dans la position de torsadage, les rouleaux supérieures 419 sont rapprochés l'un de l'autre pour être en contact avec un côté dorsal D d'une saucisse continue 10 s'étendant entre les deux pinces 3 lors d'une opération de torsadage. De plus, selon le présent mode de réalisation, dans la position de torsadage, les rouleaux inférieurs 429 sont rapprochés l'un de l'autre pour être en contact avec un côté ventral V de la saucisse continue 10.

Dans la position écartée, les rouleaux supérieurs 41 sont écartés l'un de l'autre pour permettre l'insertion d'une saucisse continue 10.

Bien entendu, selon le présent mode de réalisation, les rouleaux inférieurs 429 sont également écartés l'un de l'autre pour permettre l'insertion d'une saucisse continue 10 dans la position écartée des blocs de torsadage 4.

Au moins l'un des blocs de torsadage 43 est couplé libre en translation sur l'une des tiges 21. Selon le présent mode de réalisation, les deux blocs de torsadage 43 sont couplés libres en translation sur deux tiges 21 chacun.

Tel que cela est visible sur la figure 3, chaque bloc de torsadage 43 comprend un suiveur 431. Ce suiveur 431 est notamment formée par un galet mobile en rotation.

En référence figure 1, 2, et 3, le dispositif 1 comprend un cylindre 5 pour chacun des deux blocs de torsadage 43 comprenant un suiveur 431.

Dans le cas où une pluralité de blocs de torsadage 43 sont positionnés d'un côté de la platine 2, alors le même cylindre 5 est utilisé par chacun de ces blocs de torsadage 43.

Ce cylindre 5 est solidaire du support 11. Ce cylindre 5 est positionné en côté de la platine 2.

Le cylindre 5 présente un chemin de came 51 continu. Ce chemin de came 51 continu s'étend de manière ininterrompue le long d'une face radialement externe du cylindre 5.

Le suiveur 431 du bloc de torsadage 43 est inséré dans le chemin de came 51.

Lors d'une rotation de la platine 2 autour de l'axe 20, le bloc de torsadage 43 est entraîné en déplacement entre sa position de torsadage et sa position écartée par le guidage du suiveur 431 dans le chemin de came 51.

En référence plus spécifiquement à la figure 2, une rainure débouchante 510 s'étendant parallèlement aux tiges 21 est pratiquée dans le cylindre 5 pour permettre l'insertion des blocs de torsadage 43.

À titre indicatif, les pinces 3 mettent en oeuvre un système de galets mobile dans le chemin de came 51 pour leur entraînement en mobilité lors de la rotation de la platine 2.

Ce système suiveur/galets insérables dans le chemin de came 51 par l'intermédiaire de la rainure débouchante 510 permet :
- de désinstaller rapidement toutes les pinces et tous les blocs de torsadage pour les nettoyer, et laver le dispositif, et
- de modifier la longueur d'une saucisse produite par le dispositif grâce au retrait d'une pince située entre des blocs de torsadage, la longueur de la saucisse étant alors doublée.

En référence au figure 1, 2, 3, et 5, le bloc de torsadage 43 est mobile entre sa position écartée et sa position de torsadage grâce au mécanisme décrit ci-après.

Les moyens de torsadage 4 comprennent au moins une portion de couronne dentée 52 qui est solidaire du support 11. Cette portion de couronne dentée 52 est notamment solidaire du cylindre 5.

Le positionnement de la portion de couronne dentée 52 est notamment réalisé en fonction du chemin de cames 51.

Les moyens de torsadage 4 comprennent également un engrenage 44 qui entraîne le déplacement de l'organe supérieur 41, et plus spécifiquement la rotation du rouleau supérieur 419, porté par ledit bloc de torsadage 43, et selon le présent mode de réalisation également le déplacement de l'organe inférieur 42, et plus spécifiquement la rotation du rouleau inférieur 429.

Cet engrenage 44 est engrené avec la portion de couronne dentée 52 en position de torsadage. En effet, la rotation de la platine 2 provoque, grâce aux suiveurs 431, le positionnement d'un pignon de l'engrenage 44 dans le plan dans lequel s'étend la portion de couronne dentée 52 avant que ledit pignon ne puisse s'engrener avec la portion de couronne dentée 52. Une rotation supplémentaire de la platine 2 engrène alors le pignon sur la portion de couronne dentée 52 et provoque l'actionnement des moyens de torsadage, et plus spécifiquement la rotation des rouleaux au fur et à mesure de la rotation de la platine 2. Une rotation supplémentaire de la platine 2 provoque le désaccouplement du pignon précité de la portion de couronne dentée 52 puis l'écartement des blocs de torsadage 43 jusqu'à leur position écartée.

Tel que cela est visible sur la figure 5, dans laquelle le bloc de torsadage 43 est masqué, l'engrenage 44 comprend le pignon précité, un renvoi d'angle mettant en rotation une roue dentée centrale elle-même engrenée avec un ensemble final de roues dentées sur lesquels sont engrenés le rouleau supérieur 419, et le rouleau inférieur 429.

En référence aux figures 3, et 5, pour chaque bloc de torsadage 43, la position du rouleau inférieur 429, porté par ledit bloc de torsadage 43, est fixe par rapport au bloc de torsadage 43.

Selon le présent mode de réalisation, chaque rouleau supérieur 419 est monté mobile par rapport à l'organe inférieur, et plus spécifiquement par rapport au rouleau inférieur 429 porté par le bloc de torsadage 43, selon au moins une direction s'étendant transversalement à une saucisse continue 10 s'étendant entre les deux pinces 3 lors d'une opération de torsadage.

Les moyens de torsadage 4 comprennent alors des moyens de rappel élastique, dits premiers moyens de rappel élastique 45, des rouleaux supérieurs 419 vers une saucisse continue 10 s'étendant entre les deux pinces 3 lors d'une opération de torsadage.

Ces premiers moyens de rappel élastique 45 prennent notamment la forme d'anneaux élastiquement déformable couplés sur des tétons faisant saillie latéralement de bras couplés à une extrémité sur le bloc de torsadage 43 et portant à une autre extrémité l'axe autour duquel les rouleaux sont mobiles en rotation.

Le bras portant le rouleau inférieur 429 est monté fixe sur le bloc de torsadage, tandis que le bras portant le rouleau supérieur 419 est monté à rotation sur le bloc de torsadage 43. En conséquence, les moyens de rappel élastique 45 tendent à refermer les rouleaux supérieurs 419 sur une saucisse continue 10 en contact avec les rouleaux inférieures 429.

De la description précédente des moyens techniques du dispositif 1 selon l'invention, il ressort qu'une rotation de la platine 2 ouvre ou ferme les pinces 3, et entraîne une rotation du ou des rouleaux supérieures 419 et un déplacement de l'organe inférieur 42, et plus spécifiquement une rotation du ou des rouleaux inférieurs 429, aptes à entraîner en rotation autour d'elle-même une saucisse continue 10 qui s'étend entre les deux pinces 3.

En référence aux figures 9 à 11, un second mode de réalisation du dispositif est décrit ci-après en rapport avec les moyens techniques qui diffèrent.

Selon ce mode de réalisation, les moyens de torsadage 4 comprennent, entre deux pinces 3, au moins un organe latéral 47, et en l'occurrence un seul organe latéral 47.

Cet organe latéral 47 s'étend longitudinalement entre les deux pinces 3, et est configuré pour être en contact avec un côté latéral L de la saucisse continue 10 qui s'étend entre les deux pinces 3 lors d'une opération de torsadage.

Une rotation de la platine 2 entraîne un déplacement de l'organe latéral 47 complémentaire des déplacements de l'organe supérieur 41 et de l'organe inférieur 42, pour entraîner en rotation autour d'elle-même une saucisse continue 10 s'étendant entre les deux pinces 3.

L'organe latéral 47 prend notamment la forme d'un rouleau, dit rouleau latéral 479.

L'organe latéral 47 comprend également des dents qui sont régulièrement espacées les unes des autres.

Ces dents s'étendent chacune longitudinalement le long de l'axe du rouleau latéral 479.

L'organe latéral 47 présente, de manière similaire à l'organe inférieur précédemment décrit, un profil longitudinal présentant une portion convexe qui est préférentiellement centrée le long du profil longitudinal.

Enfin, l'organe latéral 47 est arrondi à ses extrémités longitudinales de manière à ne pas percer la saucisse continue.

Selon le présent mode de réalisation, l'organe latéral 47 est monté mobile par rapport à un support le portant, selon au moins une direction s'étendant transversalement à une saucisse continue 10 s'étendant entre les deux pinces 3 lors d'une opération de torsadage.

En l'occurrence, le rouleau latéral 479 est porté par l'un des deux blocs de torsadage 43, et est monté mobile par rapport à ce bloc de torsadage 43.

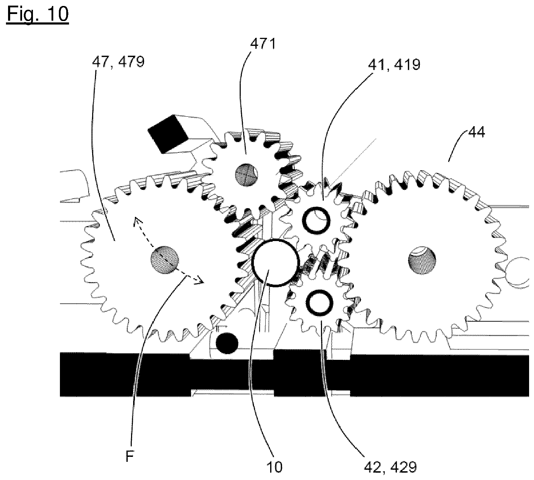

Ce rouleau latéral 479 est mobile en rotation autour d'un axe monté mobile par rapport au bloc de torsadage 43 selon un débattement courbe illustré par la flèche F sur la figure 10.

Les moyens de torsadage 4 comprennent en outre des moyens de rappel élastique, dits seconds moyens de rappel élastique 46, de l'organe latéral 47 vers une saucisse continue 10 s'étendant entre les deux pinces 3 lors d'une opération de torsadage.

Plus précisément, tel qu'illustré par la figure 10, les moyens de torsadage 4 comprennent un pignon d'entraînement 471, porté par le même bloc de torsadage que celui portant le rouleau latéral 479, et destiné à entraîner en rotation le rouleau latéral 479. Le rouleau latéral est ainsi engrené sur ce pignon d'entraînement 471. Le débattement courbe illustré par la flèche F est centré sur l'axe de rotation de ce pignon d'entraînement 471 afin de permettre l'entraînement en rotation continuel du rouleau latéral 479.

Ce pignon d'entraînement 471 est destiné à être entraîné en rotation par le rouleau supérieur 419 porté par l'autre bloc de torsadage. En effet, dans la position de torsadage des deux blocs de torsadage le pignon d'entraînement 471 est engrené avec le rouleau supérieur 419.

Selon ce mode de réalisation le rouleau supérieur 419 est monté mobile en rotation autour d'un axe monté fixe par rapport au bloc de torsadage portant le rouleau supérieur 419.

Le rouleau supérieur 419 est quant à lui entraîné en rotation par l'engrenage 44 tel qu'expliqué précédemment.

En effet, dans ce mode de réalisation, les moyens de torsadage 4 comprennent entre deux pinces 3 :
- un seul organe supérieur 41, le rouleau supérieur 419, et un seul organe inférieur 42, le rouleau inférieur 429, configurés chacun pour être respectivement en contact avec le côté dorsal D et le côté ventral V d'une saucisse continue, de manière décalée vers un côté latéral L d'une saucisse continue 10 par rapport au plan sagittal médian SM de la saucisse continue 10 entre les deux pinces 3 ;
- un seul organe latéral 47 configuré pour être en contact avec l'autre côté latéral L de la saucisse continue 10.

Toujours selon ce mode de réalisation, le rouleau supérieur 419 et le rouleau inférieur 429 sont mobiles en rotation autour d'axes de rotation montés fixe sur le bloc de torsadage 43 portant ces rouleaux.

Afin de s'assurer du bon engrènement du pignon d'entrainement 471 sur le rouleau supérieur 419, dans leur position de torsadage les blocs de torsadage 43, ou au moins une partie de ceux-ci, sont en butée l'un contre l'autre.

De plus, au moins l'un des blocs de torsadage comprend des moyens de rappel élastique, dits troisièmes moyens de rappel élastique, dans la position en butée.

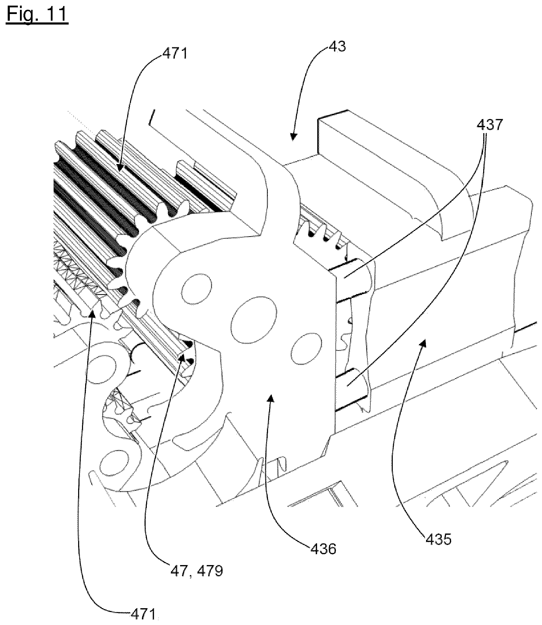

Plus précisément et en référence à la figure 11, le bloc de torsadage 43 portant le rouleau latéral 47 comprend une première partie 435 entraînée en déplacement sous l'effet du déplacement du suiveur dans le chemin de came continu, tel qu'expliqué précédemment, et une second partie 436 montée mobile en translation selon une direction s'étendant vers l'autre bloc de torsadage, et avantageusement parallèlement aux tiges sur lesquels sont couplés les blocs de torsadage 43. La seconde partie 436 est notamment montée mobile le long d'axes 437 solidaires de la première partie 435.

Lors de la phase de torsadage les deux blocs sont rapprochés l'un de l'autre et mis en butée. Le pignon d'entraînement 471 s'engrène alors avec le rouleau supérieur 419.

Les troisièmes moyens de rappel élastique (non représentés) tendent alors à maintenir en butée la seconde partie 436 du bloc de torsadage 43 contre l'autre bloc de torsadage, et ainsi à maintenir le pignon d'entrainement 471 engrené avec le rouleau supérieur 419, lors de la phase de torsadage.

Le dispositif 1 précédemment décrit permet de produire un chapelet de portions de saucisses séparées entre elles par une section torsadée de boyau, ou des saucisses distinctes présentant des queues torsadées, avec un risque nul ou faible de déchirement du boyau lors du torsadage. Ce dispositif est peu bruyant, facile à nettoyer, et permet de produire des saucisses de différentes longueurs et de différents diamètres.

## Revendications

1. Dispositif (1) de mise en portion d'une saucisse continue (10), comprenant :
- un support (11) ;
- une platine (2) montée à rotation sur le support (11) autour d'un axe (20) de la platine ;
- au moins deux pinces (3) montées sur la platine (2) autour de l'axe (20) de rotation, les deux pinces (3) étant mobiles entre une position refermée dans laquelle elles sont susceptibles de pincer une saucisse continue (10) et de la tracter au moins partiellement autour de la platine (2), et une position ouverte dans laquelle elles sont susceptibles d'accueillir une saucisse continue (10) ou de relâcher la saucisse continue (10) ;
- des moyens de torsadage (4), montés sur la platine (2), et intercalés entre deux pinces (3),
dans lequel les moyens de torsadage (4) comprennent, entre deux pinces (3) :
- au moins un organe supérieur (41), l' organe supérieur (41) s'étendant longitudinalement entre les deux pinces (3), et étant configuré pour être en contact avec un côté dorsal (D) d'une saucisse continue (10) s'étendant entre les deux pinces (3) lors d'une opération de torsadage ;
- au moins un organe inférieur (42) s'étendant longitudinalement entre les deux pinces (3), et étant configuré pour être en contact avec un côté ventral (V) d'une saucisse continue (10) s'étendant entre les deux pinces (3) lors d'une opération de torsadage ;
dans lequel une rotation de la platine (2) ouvre ou ferme les pinces (3), et entraîne un déplacement de l'organe supérieur (41) et un déplacement de l'organe inférieur aptes à entraîner en rotation autour d'elle-même une saucisse continue (10) s'étendant entre les deux pinces (3),
**caractérisé en ce que** l'organe supérieur (41) présente un profil longitudinal comportant une portion concave (410) apte à épouser la forme courbe adoptée par une saucisse continue (10) s'étendant entre les deux pinces (3),
et **en ce que** l'organe inférieur présente un profil longitudinal comportant une portion convexe (420) avec un rayon de courbure similaire à un rayon de courbure présenté par la portion concave (410) du profil longitudinal de l'organe supérieurs (41),
et **en ce que en ce que** les moyens de torsadage (4) comprennent entre deux pinces (3) au moins un organe latéral (47) s'étendant longitudinalement entre les deux pinces (3), et étant configuré pour être en contact avec un côté latéral (L) de la saucisse continue (10) s'étendant entre les deux pinces (3) lors d'une opération de torsadage,
et **en ce que** l'organe latéral est monté mobile par rapport à un support le portant,
selon au moins une direction s'étendant transversalement à une saucisse continue (10) s'étendant entre les deux pinces (3) lors d'une opération de torsadage,
et **en ce que** les moyens de torsadage (4) comprennent des moyens de rappel élastique, dits seconds moyens de rappel élastique (46), de l'organe latéral vers une saucisse continue (10) s'étendant entre les deux pinces (3) lors d'une opération de torsadage.

2. Dispositif (1) selon la revendication précédente, **caractérisé en ce que** l'organe supérieur (41) comprend des dents (411) présentant une arête (412) présentant chacune un profil longitudinal avec la portion concave (410) centrée le long de l'arête (411).

3. Dispositif (1) selon l'une quelconque des revendications précédentes, **caractérisé en ce que** l'organe supérieur (41) est formé par un rouleau, dit rouleau supérieur (419).

4. Dispositif (1) selon l'une quelconque des revendications précédentes, **caractérisé en ce que** l'organe inférieur (42) comprend des dents (421) présentant une arête (422) présentant chacune un profil longitudinal avec la portion convexe (420) centrée le long de l'arête (422).

5. Dispositif (1) selon l'une quelconque des revendications précédentes, **caractérisé en ce que** l'organe inférieur (42) est formé par un rouleau, dit rouleau inférieur (429).

6. Dispositif (1) selon l'une quelconque des revendications précédentes, **caractérisé en ce que** l'organe inférieur (41) et l'organe supérieur (42) sont arrondis aux extrémités de leurs profils longitudinaux.

7. Dispositif (1) selon l'une quelconque des revendications précédente, **caractérisé en ce que** l'organe supérieur (41) est monté mobile par rapport à l'organe inférieur (42) selon au moins une direction s'étendant transversalement à une saucisse continue (10) s'étendant entre les deux pinces (3) lors d'une opération de torsadage,
et **en ce que** les moyens de torsadage (4) comprennent des moyens de rappel élastique, dits premiers moyens de rappel élastique (45), de l'organe supérieur (41) vers une saucisse continue (10) s'étendant entre les deux pinces (3) lors d'une opération de torsadage.

8. Dispositif (1) selon l'une quelconque des revendications précédente, **caractérisé en ce que** les moyens de torsadage (4) comprennent deux blocs de torsadage (43) montés sur la platine (2) entre les deux pinces (3), l'un des deux blocs de torsadage (43), dit premier bloc de torsadage, portant le ou au moins l'un des organes supérieurs (41), et le ou au moins l'un des organes inférieurs (42), et **en ce qu'**au moins l'un des deux blocs de torsadage (43) est mobile entre :
- une position de torsadage ;
- une position écartée pour permettre l'insertion d'une saucisse continue (10).

9. Dispositif (1) selon la revendication précédente, **caractérisé en ce qu'**il comprend :
- des tiges (21) solidaires de la platine (2) et s'étendant parallèlement à l'axe (20) de la platine (2), au moins l'un des blocs de torsadage (43) étant couplé libre en translation sur au moins l'une des tiges (21), ledit bloc de torsadage (43) comprenant un suiveur (431) ;
- un cylindre (5) pour le bloc de torsadage (43) comprenant un suiveur (431), le cylindre (5) étant solidaire du support (11) et positionné en côté de la platine (2), le cylindre (5) présentant un chemin de came (51) continu dans lequel le suiveur (431) est inséré ;
la rotation de la platine (2) autour de l'axe (20) de la platine entraînant le déplacement dudit bloc de torsadage (43) entre sa position de torsadage et sa position écartée par le guidage du suiveur (431) dans le chemin de came (51).

10. Dispositif (1) selon l'une quelconque des revendications 8 et 9, **caractérisé en ce que**, pour le ou au moins un bloc de torsadage (43) mobile entre une position écartée et une position de torsadage, les moyens de torsadage (4) comprennent :
- au moins une portion de couronne dentée (52) solidaire du support (11) ;
- un engrenage (44) entraînant le déplacement de l'organe supérieur (41) porté par ledit bloc de torsadage (43), l'engrenage (44) étant engrené avec la portion de couronne dentée (52) en position de torsadage.

11. Dispositif selon l'une quelconque des revendications 1 à 10, **caractérisé en ce qu'**une rotation de la platine (2) entraîne un déplacement de l'organe latéral complémentaire des déplacements de l'organe supérieur et de l'organe inférieur, pour entraîner en rotation autour d'elle-même une saucisse continue (10) s'étendant entre les deux pinces (3).

12. Dispositif selon la revendication 11, **caractérisé en ce que** les moyens de torsadage (4) comprennent entre deux pinces (3) :
- un seul organe supérieur et un seul organe inférieur configurés chacun pour être respectivement en contact avec le côté dorsal (D) et le côté ventral (V) d'une saucisse continue, de manière décalée vers un côté latéral (L) d'une saucisse continue (10) par rapport à un plan sagittal médian de la saucisse continue entre les deux pinces (3) ;
- un seul organe latéral configuré pour être en contact avec l'autre côté latéral (L) de la saucisse continue (10).

13. Dispositif selon l'une quelconque des revendications 11 et 12, **caractérisé en ce que** l'organe latéral prend la forme d'un rouleau, dit rouleau latéral, et avantageusement présente un profil longitudinal présentant une portion convexe qui est préférentiellement centrée le long du profil longitudinal.
